**Europäisches Patentamt**

**European Patent Office**

**Office européen des brevets**

(19)

(11) Publication number : **0 081 273 B2**

(12) # NEW EUROPEAN PATENT SPECIFICATION

(45) Date of publication of the new patent specification : **20.05.92 Bulletin 92/21**

(51) Int. Cl.$^5$ : **A01G 9/14**

(21) Application number : **82201549.1**

(22) Date of filing : **03.12.82**

(54) **Gutter profile for a glasshouse as well as a gutter made from it.**

(30) Priority : **03.12.81 NL 8105457**

(43) Date of publication of application : **15.06.83 Bulletin 83/24**

(45) Publication of the grant of the patent : **12.03.86 Bulletin 86/11**

(45) Mention of the opposition decision : **20.05.92 Bulletin 92/21**

(84) Designated Contracting States : **AT BE CH DE FR GB IT LI LU NL SE**

(56) References cited :
**NL-A- 7 017 622**
**US-A- 1 696 159**
**"Lips aluminium in de tuinbouw en bloemen-teelt", 1971**
**"Boal Aluminium", 1977**

(73) Proprietor : **J.M. VAN DER HOEVEN B.V.**
**Galgeweg 42**
**NL-2671 MR Naaldwijk (NL)**
Proprietor : **INVEKA B.V.**
**Valkenlaan 6**
**NL-2291 BP Wateringen (NL)**

(72) Inventor : **van der Hoeven, Nicolaas Hendricus Wilhelmus**
**Galgeweg 42**
**NL-2691 MG 's-Gravenzande (NL)**
Inventor : **Slaman, Joannes Maria**
**Dijkshoornseweg 66**
**NL-2635 ER Den Hoorn (NL)**

(74) Representative : **van der Beek, George Frans, Ir. et al**
**Nederlandsch Octrooibureau**
**Scheveningseweg 82 P.O. Box 29720**
**NL-2502 LS 's-Gravenhage (NL)**

EP 0 081 273 B2

## Description

The invention relates to a gutter profile for a greenhouse, which profile lies between the roofs and can be connected to the supporting structure, which profile, seen in the cross section, comprises a downwardly and towards the center tapering bottom portion, which bottom portion at its edges, which are turned away from the center, merges into more steeply inclined upwardly extending side walls which by means of an inwardly and subsequently outwardly bent portion form upwardly inclined and outwardly directed edge flanges for supporting glass panes and glass rods, the outer edges of the said edge flanges lying vertically above the inward bend of the side walls.

Such a gutter profile is known from NL-A-7 017 622. This known gutter profile has a relatively small height and a large width.

Such a profile has a small moment of resistance. Due to its width it gives a relatively large shadow.

The inwardly bent portion of the side walls, which portion subsequently bends outwardly again and merges into the upwardly and inclined and outwardly directed edge flanges, has the shape of an S-shaped curve of small height immediately below the edge flanges. Its inwardly bent leg extends parallel to the edge flange which means that it is inclined downwardly. Water which consdensates upon the, lower surface of the glass panes, supported by the edge flanges, is collected by said inwardly extending leg of the inwardly bent portion and dicharged through holes into the gutter profile. Water which condensates upon the lower side of the glass profiles, which are profiles supporting the glass sheets and extend in planes perpendicular to the longitudinal direction of the gutter profile, will at least partly not be discharged in the same way. This is due to the fact that said glass profiles are in contact with said inwardly bent leg and when they meet the inward bend, they will collect there and drop downwardly and create damage to the products inside the greenhouse.

The S-shaped bent portion acts as a spring and does not materially improve the moment of resistance.

Purpose of the invention is to provide a gutter profile avoiding such objections.

According, to the invention this is achieved in that the inwardly bent section of the side walls extends inwardly and upwardly from the top of the more steeply inclined side wall portion, and the inner end of the inwardly bent section merges into a planar vertical, upwardly extending side wall portion, the upper end of which merges into said edge flanges, such that condensation dripping from a glass pane is caught by said inwardly and upwardly bent section.

Accordingly a gutter profile is obtained which is less broad and more high. Due to this it has a larger moment of resistance so that the distance between the supports can be larger. This changes the entire construction of the greenhouse because one needs a lesser number of glass rods and a lesser number of frameworks whereas the dimensions of the glass plate easily are adaptable. This easily can lead to a reduction in material of 25%.

The narrower profile gives less shadow whereas condensation running downwardly along the underside of the glass panes and falling downwardly at the gutter edges again falls upon the inward bent portion and subsequently runs along the underside of the profile towards the lowermost portion where it can be collected in a condensation gutter.

Due to the fact that the said sidewall portions between the inward bend and the inner edge of the flanges are vertical parts, the moment of resistance is improved.

To join the known gutter profiles it is known to shift each profile at least at one end over a distance corresponding to the thickness of the wall. The other end of the joining gutting profile then by means of holes and bolts can be connected to the shifted portion such that the gutter bottoms of adjoining profiles lie in one plane. With the known relatively flat profile this shift forms no problem. With the profile according to the invention this shift is not very well possible. Accordingly according to the invention the shift only has been applied in the bottom and the more steeply inclined side wall portion lying below the inwardly curved parts. The interconnection of the profile length then can take place in the usual way but it is preferred to perform the connection moreover by means of strips connectable by means of bolts and which according to the invention below their place of interconnection with the side wall portion of the profile do have downwardly extending part which with a profile fits against the inner side of the inward bend and the adjacent more steeply inclined portion of the said wall of the profile.

Flat strips for a direct connection of profiles are known in itself. With gutter-shaped profiles they, however, are not desirable within the gutter portion, because they promote the adherence of dirt.

The invention offers the possibility of a direct connection of the profiles with the aid of the profiled strips which engage the inwardly curved portions or to do this with the aid of the said downwardly shifted part at one end and also offers the possibility to combine the two means of interconnection. Due to the fact that the strips are present in the upper portion of the gutter the risk of dirt collection is reduced whereas a very bending resistance connection still is possible.

The invention will be further elucidated with reference to the drawings.

Fig. 1 shows in cross section the profile according to the invention;

Fig. 2 shows a side-view the coupling of two profile lengths; and

Fig. 3 is a cross section according to the line III-III of Fig. 2.

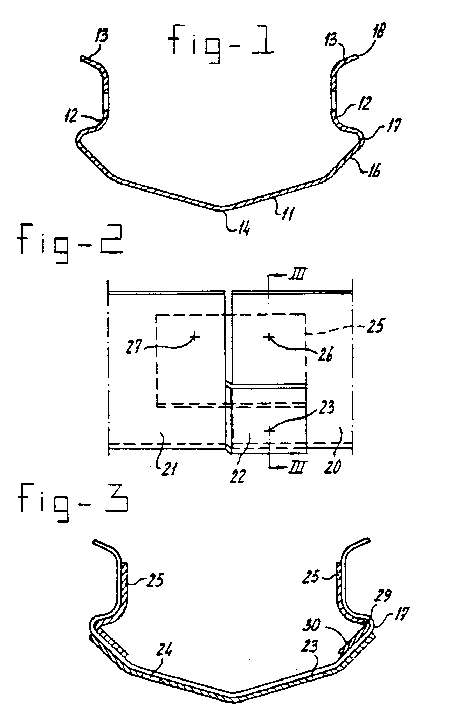

The profile according to the invention shown in Fig. 1 has a V-shaped flat bottom portion 11, side wall portions 12 and edge flanges 13. The bottom portion 11 from the middle primarily extends at an angle of 16° with respect to the horizontal upwardly, which angle subsequently at 16 becomes more steep there where the lower side-walls begins.

At 17 the profile is bent inwardly to form the upwardly extending side wall portion 12, which extends vertically. The vertical portion increases the bending resistance of the profile.

The edge 18 in principle lies above the place 17 where the inward bend starts and even a little bit further inwardly so that the mounting profile for the glass pane connected to it will have its dripping edge above the curve 17. By this one obtains that condensation water collected at the lower side of the glass pane also moves towards the lower edge 14.

The interconnection of the profiles can take place in the way shown in Figs. 1 and 3.

Fig. 2 shows an outer end 20 of one profile and an outer end 21 of another profile. The outer end 21 has a downwardly shifted lower portion 22. The connection takes place by means of bolts extending through holes 23, 24.

Further the connection can take place by means of strips 25 and bolt holes 26, 27. As appears from Fig. 3 as well as from the side view of Fig. 2, the shift can be provided in that lower portion of the profile only which lies below the place 17 where the inward bend starts.

Fig. 3 shows that the strips 25 have a lower portion which fits exactly at 29 within the inner side of the inwardly bent portion and still has a downwardly extending leg 30 which lies against the upper surface of the lower side wall portion. An interconnecting strip profiled in this way offers a connection with very large rigidity. Said strip can be applied alone which means without the shift and directly joint of the profiles 21 and 20, but also can be used in combination with the shift.

Of course, one also can apply an interconnecting strip against the lower sides of directly joining profiles.

**Claims**

1. Gutter profile for a greenhouse, which profile lies between the roofs and can be connected to the supporting structure, which profile, seen in the cross section, comprises a downwardly and towards the center (14) tapering bottom portion (11), which bottom portion (11) at its edges, which are turned away from the center (14), merges into more steeply inclined upwardly extending side walls (16), which by means of an inwardly and subsequently outwardly bent portion (17,12,13) form upwardly inclined and outwardly directed edge flanges (13) for supporting glass panes and glass rods, the outer edges (18) of the said edge flanges (13) lying vertically above the inward bend (17) of the side walls, characterized in that the inwardly bent section of the side walls (16,17,12,13) extends inwardly and upwardly from the top (17) of the more steeply inclined side wall portion (16), and the inner end of the inwardly bent section merges into a planar vertical, upwardly extending side wall portion (12), the upper end of which merges into said edge flanges (13), such that condensation dripping from a glass pane is caught by said inwardly and upwardly bent section.

2. Gutter profile as claimed in claim 1 in which the profile at least at one end has been shifted over a distance corresponding with the wall thickness, characterized in that said shift (22) is only present in the bottom and the more steeply inclined side wall portion (16) lying be low the inward bend (17).

3. Gutter for a greenhouse comprising interconnected gutter profiles according to claim 1 or 2, characterized in that said profiles at the side wall portions are interconnected by means of strips (25) connectable by means of bolts, said strips (25) below the place of connection with the side wall portions (12) have a downwardly extending portion (29) with a profile which fits against the inner side of the inward bend (17) and the adjacent more steeply inclined portion (16) of the side wall.

**Patentansprüche**

1. Rinnenprofil für ein Gewächshaus, welches Profil zwischen den Dächern liegt und mit der tragenden Struktur verbunden werden kann, welches Profil im Querschnitt gesehen einen sich nach unten und zum Zentrum (14) hin verjüngenden Bodenteil (11) umfasst, welcher Bodenteil (11) an seinen vom Zentrum (14) abgewandten Kanten in steilere, sich nach oben erstreckende Seitenwände (16) übergeht, die mittels eines nach innen und anschliessend nach aussen gebogenen Teils (17,12,13) schräg nach oben und nach aussen gerichtete Kantenflansche (13) zur Abstützung von Glasscheiben und Glasstangen bilden, wobei die äusseren Kanten (18) der genannten Kantenflansche (13) senkrecht über der Biegung (17) der Seitenwände nach innen liegen, dadurch gekennzeichnet, dass sich der nach innen gebogene Abschnitt der Seitenwände (16,17,12, 13) vom höchsten Teil (17) des steileren Seitenwandteils (16) aus nach innen und nach oben erstreckt, und das innere Ende des nach innen gebogenen Abschnitts in einen ebenen, vertikalen, sich nach oben erstrecken den Seitenwandteil (12) übergeht, dessen oberes Ende in die genannten Kantenflansche (13) übergeht, derart, dass von einer Glasscheibe herabtropfende Kondensation von dem genannten nach innen und oben gebogenen Abschnitt aufgefangen wird.

2. Rinnenprofil nach Anspruch 1, in welchem das Profil mindestens an einem Ende um eine der Wandungsdicke entsprechende Distanz versetzt wurde, dadurch gekennzeichnet, das die genannte Versetzung (22) nur am Boden und an dem unterhalb der Biegung (17) nach innen liegenden geneigteren Seitenwandteil (16) vorliegt.

3. Rinne für ein Gewächshaus, umfassend miteinander verbundene Rinnenprofile nach Anspruch 1 oder 2, dadurch gekennzeichnet, dass die genannten Profile an den Seitenwandteilen mittels durch Bolzen verbindbare Bänder (25) miteinander verbunden sind und die genannten Bänder (25) unterhalb der Verbindungsstelle mit den Seitenwandteilen (12) einen sich nach unten erstreckenden Teil (29) aufweisen mit einem Profil, das sich an die Innenseite der Biegung (17) nach innen und an den anschliessenden geneigteren Seitenwandteil (16) anfügt.

## Revendications

1. Profilé de gouttière pour une serre, ce profilé étant disposé entre les toits et pouvant être relié à la structure porteuse, ce profilé, vu en coupe transversale, comprenant une portion de fond (11) qui se rétrécit vers le bas et vers le centre (14), cette portion de fond (11) fusionnant en ses arêtes détournées du centre (14) avec des parois latérales (16) plus fortement inclinées et s'étendant vers le haut, lesquelles forment, au moyen d'une portion (17,12,13) courbée vers l'intérieur et ensuite vers l'extérieur, des ailes d'arête (13) inclinées vers le haut et dirigées vers l'extérieur et destinées à supporter des panneaux de verre et des tiges de verre, les bords extérieurs (18) de ces ailes d'arête (13) étant disposés verticalement au-dessus de la coubure (17) des parois latérales vers l'intérieur, caractérisé en ce que la section des parois latérales (16,17,12,13) courbée vers l'intérieur s'étend vers l'intérieur et vers le haut depuis l'extrémité supérieure (17) de la portion de paroi latérale (16) plus fortement inclinée, et l'extrémité intérieure de la section courbée vers l'intérieur se joint à une portion de paroi latérale (12) plane verticale qui s'étend vers le haut et dont l'extrémité supérieure se joint aux ailes d'arête (13), de sorte que la condensation qui goutte d'un panneau de verre est recueillie par la section courbée vers l'intérieur et vers le haut.

2. Profilé de gouttière selon la revendication 1 dans lequel au moins à une extrémité le profilé a été déplacé sur une distance qui correspond à l'épaisseur de la paroi, caractérisé en ce que ce déplacement (22) n'est présent que dans le fond et dans la portion plus inclinée de paroi latérale (16) située au-dessous de la courbure (17) vers l'intérieur.

3. Gouttière pour une serre comprenant des profilés de gouttière selon la revendication 1 ou 2 reliés entre eux, caractérisée en ce qu'à l'emplacement des portions de paroi latérale ces profilés sont interconnectés au moyen de bandes (25) que l'on peut relier par des boulons, ces bandes (25) présentant au-dessous de l'emplacement de connexion avec les portions de paroi latérale (12) une portion (29) qui s'étend vers le bas avec un profil qui s'adapte au côté intérieur de la courbure vers l'intérieur (17) et à la portion plus inclinée adjacente (16) de la paroi latérale.

Fig-1

Fig-2

Fig-3